Europäisches Patentamt

European Patent Office

Office européen des brevets

(11) Veröffentlichungsnummer: **0 299 281**
**A1**

## (12) EUROPÄISCHE PATENTANMELDUNG

(21) Anmeldenummer: 88110406.1

(22) Anmeldetag: 29.06.88

(51) Int. Cl.4 **H01F 7/22 , H02H 7/00**

(30) Priorität: 13.07.87 DE 3723127

(43) Veröffentlichungstag der Anmeldung:
**18.01.89 Patentblatt 89/03**

(84) Benannte Vertragsstaaten:
**DE FR GB NL**

(71) Anmelder: **Siemens Aktiengesellschaft Berlin und München**
**Wittelsbacherplatz 2**
**D-8000 München 2(DE)**

(72) Erfinder: **Kusserow, Bernd Dipl.-Ing.**
**Schallershoferstrasse 64 a**
**D-8520 Erlangen(DE)**
Erfinder: **Gagneur, Klaus Dipl.-Ing**
**Mozartstrasse 5**
**D-8523 Hagenau(DE)**
Erfinder: **Hofler, Siegfried Dipl.-Ing**
**Obere Büch 12**
**D-8520 Buckenhof(DE)**

(54) Schutzschaltung für ein Netzgerät zur Auf- bzw. Aberregung eines supraleitenden Spulensystems.

(57) Das Netzgerät soll auch während des Auf- bzw. Aberregungsvorganges geschützt sein.

Erfindungsgemäß wird dies dadurch erreicht, daß eine Spannungsüberwachungsschaltung (2b) zur Überwachung der Ausgangsspannung an den Ausgangsklemmen des Netzgerätes (1) vorgesehen ist und daß ein parallel zu den Ausgangsklemmen des Netzgerätes (1) angeordneter Schalter (2c) von der Spannungsüberwachungsschaltung (2b) geschlossen wird, sobald die Ausgangsspannung einen vorgegebenen Wert in einer Richtung entgegengesetzt zur Speisespannung des Netzgerätes (1) überschreitet. Damit schließt bei einer Störung der Schalter (2c) und übernimmt den vom supraleitenden Spulensystem (3) weitergetriebenen Strom.

Die Erfindung kann vorteilhaft z.B. für supraleitende Magnete von Kernspin-Tomographen eingesetzt werden.

## Schutzschaltung für ein Netzgerät zur Auf- bzw. Aberregung eines supraleitenden Spulensystems

Die Erfindung betrifft eine Schutzschaltung für ein Netzgerät zur Auf- bzw. Aberregung eines supraleitenden Spulensystems, wobei den Ausgangsklemmen des Netzgerätes ein erster Schalter parallel geschaltet ist.

Um eine supraleitende Spule mit Strom zu beaufschlagen, wird an diese ein Netzgerät mit einer Stromquelle angeschlossen, deren Speisestrom zum Auferregen kontinuierlich erhöht wird. Sobald der gewünschte Strom erreicht ist, wird ein zur Spule parallel liegender supraleitender Dauerstromschalter geschlossen. Der Strom durch die supraleitende Spule fließt dann in einem geschlossenen Stromkreis über den Dauerstromschalter, das Netzgerät kann abgeschaltet werden. Wenn der Stromfluß durch die supraleitende Spule geändert werden soll, so wird das Netzgerät wieder eingeschaltet und der Dauerstromschalter geöffnet. Über das Netzgerät kann der Strom dann auf den gewünschten Wert gebracht werden.

Wenn bei dieser Anordnung der Dauerstromschalter bei abgeschaltetem Netzgerät versehentlich öffnet, z.B. durch einen ungewollten Quench, also Übergang in den normalleitenden Zustand, so fließt plötzlich der gesamte Strom der supraleitenden Spule über das Netzgerät und verursacht dort einen Spannungsabfall in einer Richtung entgegengesetzt zur Speisespannung, der zur Zerstörung des Netzgerätes führen könnte. Um dies zu verhindern, werden solche Netzgeräte im abgeschalteten Zustand teilweise durch Thyristoren oder durch Schütze an den Ausgangsklemmen kurzgeschlossen.

Mit dieser Anordnung ist das Netzgerät aber nicht gegen Fehler beim Auf- bzw. Aberregen geschützt, da dann der Kurzschluß an den Ausgangsklemmen aufgehoben sein muß. Wenn beim Auf- bzw. Aberregen das Netzgerät aufgrund eines Fehlerfalls, z.B. Ausfall der Stromversorgung oder eines Fehlers in der Stromquelle, nicht mehr den gerade durch die supraleitende Spule fließenden Strom liefern kann, so wird dieser durch die Induktivität der supraleitenden Spule weiter durch das Netzgerät getrieben und kann dort - je nach Innenwiderstand des Netzgerätes - zu einem hohen Spannungsabfall und zu einer Zerstörung des Netzgerätes führen. Die supraleitenden Spulen selbst sind zwar im allgemeinen durch parallel geschaltete, im Kryostaten angeordnete Schutzeinrichtungen gegen Überspannungen geschützt. Die Ableitung über diese Schutzeinrichtungen führt jedoch dazu, daß die in der supraleitenden Spule gespeicherte Energie über diese Schutzeinrichtungen abgebaut wird. Die damit verbundene Aufheizung der Schutzeinrichtungen führt durch Verdampfen des Heliums zum Quenchen der supraleitenden Spule.

Aufgabe der Erfindung ist es somit, das Netzgerät auch während des Auf- und Aberregens vor Beschädigung zu schützen und bei Störungen den Energieabbau nicht im supraleitenden Spulensystem bzw. im Netzgerät durchzuführen.

Diese Aufgabe wird erfindungsgemäß dadurch gelöst, daß eine Spannungsüberwachungsschaltung zur Überwachung der Ausgangsspannung an den Ausgangsklemmen des Netzgerätes vorgesehen ist und daß der erste Schalter von der Spannungsüberwachungsschaltung geschlossen wird, sobald die Ausgangsspannung einen vorgegebenen Wert in einer Richtung entgegengesetzt zur Speisespannung des Netzgerätes überschreitet.

Damit wird im Störungsfall (Öffnen des Dauerstromschalters oder Ausfall des Netzgerätes) die an der supraleitenden Spule entstehende Spannung klein gehalten. Die Schutzschaltung weist einen sehr geringen Widerstand auf, so daß die Verlustleistung in der Schutzschaltung klein bleibt. Damit kann die Schutzschaltung mit geringen Dimensionen aufgebaut werden. Ferner ist wegen des geringen Widerstandes der Schutzschaltung die Stromänderung und die daraus resultierende Feldänderung bei Ansprechen der Schutzschaltung gering. Damit kann man z.B. beim Auferregen nach einer kurzen Störung den Auferregungsvorgang mit einem nur wenig verringerten Strom fortsetzen.

In einer vorteilhaften Ausführungsform kann der erste Schalter eine hohe Schaltgeschwindigkeit bei geringer Dauerstrombelastbarkeit aufweisen und dem ersten Schalter ein zweiter, langsamerer Schalter mit höherer Dauerstrombelastbarkeit parallel geschaltet sein, der ebenfalls geschlossen wird, wenn die Spannung an den Ausgangsklemmen des Netzgerätes einen vorgegebenen Wert in einer Richtung entgegengesetzt zur Speisespannung des Netzgerätes überschreitet. Der zweite Schalter kann geschlossen werden, wenn der Strom durch die Schutzschaltung einen vorbestimmten Maximalwert überschreitet.

Dabei kann vorteilhafterweise als erster Schalter ein Thyristor und als zweiter Schalter ein Schütz eingesetzt werden. Der Thyristor reagiert sehr schnell auf die Überspannung und muß die Verlustleistung nur für eine kurze Zeit übernehmen, so daß sein Kühlkörper und damit die Schutzschaltung klein ausgelegt werden kann. Das Schütz übernimmt dann den Strom durch die supraleitende Spule mit einem sehr kleinen Spannungsabfall.

Eine Wiederinbetriebnahme des Netzgerätes ohne zusätzliche Eingriffe wird möglich, wenn das Schütz geöffnet wird, sobald der Strom durch die Schutzschaltung einen vorbestimmten Wert unterschreitet.

In einer vorteilhaften Ausführungsform kann als Schalter ein Öffnerkontakt eines Schützes eingesetzt werden. Damit wird die Funktion der Spannungsüberwachung unabhängig von irgendwelchen Hilfsspannungen, da das Schütz bei einem Ausfall der Spannungsversorgung schließt. Damit ist sichergestellt, daß auch bei Netzausfall oder bei Ausfall der Ansteuerung für das Schütz die Schutzschaltung wirksam wird.

Ein Ausführungsbeispiel der Erfindung wird nachfolgend anhand der FIG beschrieben:

Einem supraleitenden Spulensystem 3 ist ein Dauerstromschalter 4 und ein Netzgerät 1 parallel geschaltet. Das supraleitende Spulensystem 3 kann mit einem von einer Stromquelle des Netzgerätes 1 erzeugten Strom auferregt werden, wenn der supraleitende Dauerstromschalter 4 geöffnet ist. Wenn der Strom im supraleitenden Spulensystem 3 den gewünschten Wert erreicht, so wird durch Schließen des supraleitenden Dauerstromschalters 4 der supraleitende Stromkreis geschlossen. Damit kann das Netzgerät 1 abgeschaltet werden. Mit Hilfe des Netzgerätes 1 ist auch eine Umerregung des supraleitenden Spulensystems 3 möglich, indem der Dauerstromschalter 4 wieder geöffnet wird und über das Netzgerät 1 der Strom durch das supraleitende Spulensystem 3 auf den gewünschten Wert geändert wird.

Aus den in der Beschreibungseinleitung beschriebenen Gründen könnten ohne Zusatzmaßnahmen Störungen, wie z.B. Spannungsausfall, Ausfall des Netzgerätes 1 oder Öffnen des Dauerstromschalters 4, zu einer Zerstörung des Netzgerätes 1 und/oder zu einem Quenchen des supraleitenden Spulensystems 3 führen.

Um die negativen Auswirkungen der beschriebenen Störfälle zu verhindern, ist gemäß der FIG eine Schutzschaltung 2 mit einer Spannungsüberwachungsschaltung 2b, einem Thyristor 2c, einem Schütz 2d und einer Stromerfassungsschaltung 2a vorgesehen. Dabei ist der Thyristor 2c den Ausgangsklemmen des Netzgerätes 1 parallel geschaltet und wird von der ebenfalls parallel zu den Ausgangsklemmen des Netzgerätes 1 angeordneten Spannungsüberwachungsschaltung 2b angesteuert, wenn die Spannung an den Ausgangsklemmen des Netzgerätes 1 einen vorbestimmten Spannungswert entgegengesetzt zur Speisespannung des Netzgerätes 1 annimmt. Dem Thyristor 2c ist ein Schütz 2d parallel geschaltet, das von einer Stromerfassungsschaltung 2a angesteuert wird. Die Stromerfassungsschaltung 2a erfaßt den durch das Schütz 2d und den Thyristor 2c fließenden Strom.

Wenn nunmehr aufgrund der bereits genannten Störfälle die Spannung an den Ausgangsklemmen des Netzgerätes 1 in einer Richtung entgegengesetzt zu dessen Speisespannung den mit der Spannungsüberwachungsschaltung 2b vorgegebenen Wert überschreitet, zündet der Thyristor 2c, so daß der von der supraleitenden Spule 3 gelieferte Strom über den Thyristor 2c fließt. Der Thyristor 2c kann diesen Strom sehr schnell übernehmen, da er eine hohe Schaltgeschwindigkeit aufweist. Da aber Thyristoren eine Durchlaßspannung von ca. 1 V aufweisen, kann die entstehende Verlustleistung beträchtliche Werte annehmen, so daß zumindest bei kleinen Kühlkörpern die Dauerstrombelastbarkeit begrenzt ist.

Um dieses Problem zu umgehen, wird bei Erreichen der mit der Stromerfassungsschaltung 2a vorgegebenen Stromstärke durch den Thyristor 2c das Schütz 2d angesteuert, das dann aufgrund des geringeren Durchlaßwiderstandes den gesamten Strom übernimmt, so daß der Thyristor 2c erlischt. Wegen des geringen Durchlaßwiderstandes des Schützes 2d wird die abfallende Spannung und damit die Verlustleistung klein. Dies hat außerdem den Vorteil, daß dem supraleitenden Spulensystem 3 im Störungsfall nur wenig Energie entzogen wird und damit der fließende Strom nur langsam abnimmt. Nach einer kurzfristigen Störung während der Auferregung kann somit z.B. die Auferregung mit einem nur wenig veränderten Stromwert weitergeführt werden.

Wenn das Netzgerät 1 wieder funktionsfähig und ein Auf- bzw. Aberregungsvorgang neu gestartet wird, stellt man den vom Netzgerät 1 gelieferten Strom auf den gerade im supraleitenden Spulensystem 3 fließenden Strom ein. Damit wird der Strom durch die Schutzschaltung 2 reduziert, die Stromerfassungsschaltung 2a öffnet bei Erreichen eines vorbestimmten Stromwertes das Schütz 2d. Da der Thyristor 2c gelöscht ist, wird damit der Kurzschluß des Netzgerätes 1 aufgehoben.

Da die Funktion der Schutzschaltung 2 gerade dann wichtig ist, wenn die Netzspannung ausfällt, muß die Schutzschaltung 2 auch bei Spannungsausfall funktionsfähig bleiben. Dies kann am einfachsten dadurch erreicht werden, daß das Schütz 2d mit einem Öffnerkontakt ausgestattet ist, so daß die Schutzschaltung 2 bei fehlender Spannungsversorgung immer kurzgeschlossen ist. Wenn die Spannungsversorgung eingeschaltet wird, liefert die Stromerfassungsschaltung 2a einen Steuerstrom für das Schütz 2d, solange sie nicht angesprochen hat, so daß das Schütz 2d in diesem Falle öffnet. Bei Ansprechen der Stromerfassungsschaltung 2a wird der Steuerstrom für das Schütz 2d ausgeschaltet, so daß der Öffner schließt und - wie gewünscht - die Ausgangsklemmen des Netzgerätes 1 kurzschließt.

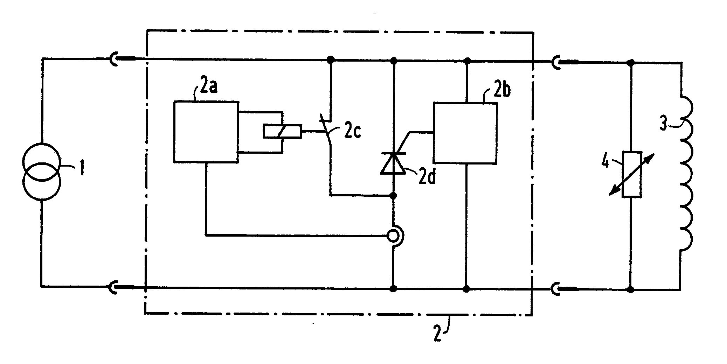

## Ansprüche

1. Schutzschaltung (2) für ein Netzgerät (1) zur Auf- bzw. Aberregung eines supraleitenden Spulensystems (3), wobei den Ausgangsklemmen des Netzgerätes (1) ein erster Schalter (2c) parallel geschaltet ist,

**dadurch gekennzeichnet,**

daß eine Spannungsüberwachungsschaltung (2b) zur Überwachung der Ausgangsspannung an den Ausgangsklemmen des Netzgerätes (1) vorgesehen ist und daß der erste Schalter (2c) von der Spannungsüberwachungsschaltung (2b) geschlossen wird, sobald die Ausgangsspannung einen vorgegebenen Wert in einer Richtung entgegengesetzt zur Speisespannung überschreitet.

2. Schutzschaltung nach Anspruch 1,

**dadurch gekennzeichnet,**

daß der erste Schalter (2c) eine hohe Schaltgeschwindigkeit bei geringer Dauerstrombelastbarkeit aufweist und daß dem ersten Schalter (2c) ein zweiter, langsamerer Schalter (2d) mit hoher Dauerstrombelastbarkeit parallel geschaltet ist, der ebenfalls geschlossen wird, wenn die Spannung an den Ausgangsklemmen des Netzgerätes (1) einen vorgegebenen Wert in einer Richtung entgegengesetzt zur Speisespannung des Netzgerätes (1) überschreitet.

3. Schutzschaltung nach Anspruch 2,

**dadurch gekennzeichnet,**

daß der zweite Schalter (2d) geschlossen wird, wenn der Strom durch die Schutzschaltung (2) einen vorbestimmten Maximalwert überschreitet.

4. Schutzschaltung nach Anspruch 2 oder 3,

**dadurch gekennzeichnet,**

daß als erster Schalter (2c) ein Thyristor und als zweiter Schalter (2d) ein Schütz eingesetzt wird.

5. Schutzschaltung nach Anspruch 4,

**dadurch gekennzeichnet,**

daß das Schütz (2d) geöffnet wird, sobald der Strom durch die Schutzschaltung (2) einen vorbestimmten Wert unterschreitet.

6. Schutzschaltung nach einem der Ansprüche 2 bis 5,

**dadurch gekennzeichnet,**

daß als Schalter (2d) ein Öffnerkontakt eines Schützes eingesetzt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 8, Nr. 49, 6. März 1984, Seite 54 E 230; & JP-A-58 202 509 (TOKYO SHIBAURA DENKI K.K.) 25-11-1983 * Zusammenfassung * --- | 1,4 | H 01 F 7/22 H 02 H 7/00 |
| A | PATENT ABSTRACTS OF JAPAN, Band 5, Nr. 133 (605), 25. August 1981, Seite 66 E 71; & JP-A-56 69 810 (TOKYO SHIBAURA DENKI K.K.)11-06-1981 * Zusammenfassung * --- | 1-6 | |
| A | DE-A-2 137 776 (SIEMENS) --- | | |
| A | PATENT ABSTRACTS OF JAPAN, Band 9, Nr. 288 (2011), 15. November 1985, Seite 132 E 358; & JP-A-60 130 107 (TOSHIBA K.K.) 11-07-1985 --- | | |
| A | PATENT ABSTRACTS OF JAPAN, Band 10, Nr. 87 (2144), 5. April 1986, Seite 164 E 393; & JP-A-60 233 808 (TOSHIBA K.K.) 20-11-1985 ----- | | |

**RECHERCHIERTE SACHGEBIETE (Int. Cl.4)**

H 01 F 7/00
H 02 H 7/00
H 02 H 9/00

Der vorliegende Recherchenbericht wurde für alle Patentansprüche erstellt

| Recherchenort | Abschlußdatum der Recherche | Prüfer |
|---|---|---|
| DEN HAAG | 17-10-1988 | VANHULLE R. |